# EUROPÄISCHE PATENTSCHRIFT

(11) **EP 0 836 169 B1**
(45) Veröffentlichungstag und Bekanntmachung des Hinweises auf die Patenterteilung: **28.04.1999**
(21) Anmeldenummer: 97115243.4
(22) Anmeldetag: 03.09.1997
(51) Int. Cl.: G09B 9/05

(54) **Trainingsstation und Verwendung der Trainingsstation**
Training work station and use of the same
Station de travail d'entraînement et son utilisation

(30) Priorität: 16.09.1996 CH 2262/96
(43) Veröffentlichungstag der Anmeldung: 15.04.1998
(73) Patentinhaber: OERLIKON CONTRAVES AG, 8050 Zürich (CH)
(72) Erfinder: Buehler, Bruno, 8174 Stadel (CH); Dueringer, Heinrich, CH-8156 Oberhasli, Schweiz (CH)
(74) Vertreter: Hotz, Klaus, Dipl.-El.-Ing./ETH Patentanwalt

(56) Entgegenhaltungen:
- EP-A- 0 455 540
- EP-A- 0 487 385
- EP-A- 0 564 368
- WO-A-93/24915
- WO-A-96/04636
- WO-A-96/14713
- DE-A- 4 221 602
- DE-A- 4 442 378
- DE-U- 9 000 851
- GB-A- 2 099 964
- "DRIVING SIMULATION AT FORD" AUTOMOTIVE ENGINEERING, Bd. 102, Nr. 9, 1.September 1994, Seiten 37-40, XP000469064
- "DRIVING SIMULATION AT GENERAL MOTORS" AUTOMOTIVE ENGINEERING, Bd. 102, Nr. 9, 1.September 1994, Seiten 14-19, XP000469061

## Beschreibung

Die Erfindung betrifft eine Trainingsstation zum Erlemen des Führens eines motorisierten, erdgebundenen Fahrzeuges nach dem Oberbegriff des Patentanspruchs 1 sowie eine Verwendung der Trainingsstation.

Trainingsstationen dieser Art, die auch als Fahrsimulatoren bezeichnet werden, haben zum Zweck, Fahrunterricht mindestens teilweise nicht auf der Strasse bzw. im Gelände zu erteilen. Damit werden verschiedene Ziele erreicht: Der Fahrschüler gefährdet während des Unterrichtes weder sich noch die übrigen Verkehrsteilnehmer und er bildet kein allgemeines Verkehrshindernis, was unter anderem zu einem entspannten Lernverhalten verhilft; das Schulfahrzeug wird geschont und es wird kein Treibstoff verbraucht, was aus ökonomischen und ökologischen Gründen vorteilhaft ist; die Zeit, die ein Instruktor für einen Schüler aufwenden muss, wird reduziert, da der Fahrschüler in der Trainingsstation des Instruktors nicht dauernd bedarf.

Die Trainingsstationen bestehen im wesentlichen aus zwei miteinander verknüpften Baugruppen, nämlich einer fahrzeugseitigen Baugruppe und einer zur Simulation von Verkehrsszenarien dienenden Baugruppe.

Die fahrzeugseitige Baugruppe umfasst eine Fahrerkabine bzw. einen Ersatz für eine solche, in welcher der Fahrschüler für den Unterricht Platz nimmt; die Fahrerkabine ist mit Betätigungsmitteln ausgerüstet, die dem Fahrschüler eine simulative Betätigung des simulierten Fahrzeuges gestatten; im weiteren sind meist Anzeigegeräte vorhanden, wie sie auch in üblichen Fahrzeugen zu finden sind. Je nach der Qualität der Trainingsstation sind mehr oder weniger Betätigungsmittel und Anzeigegeräte angeordnet.

Die zur Simulation von Verkehrsszenarien dienende Baugruppe umfasst mindestens ein System, mittels welchem dem Fahrschüler optisch wahrnehmbare Verkehrsszenarien dargestellt werden. Dieses System besteht im wesentlichen aus einer Projektorenanlage und aus einer dazugehörigen Projektions- bzw. Wiedergabefläche, auf welche sich der Blick des Fahrschülers richtet und welche abgewinkelt oder gekrümmt ist und in geeignetem Abstand von der Fahrerkabine bzw. etwa halbkreisartig um diese herum angeordnet ist.

Damit solche Trainingsstationen nicht allzu voluminös werden, wird die Projektions- bzw. Wiedergabefläche häufig unmittelbar vor der Fahrerkabine angeordnet. Bei Verwendung geeigneter Verkehrsszenarien erhält man auf diese Weise zwar eine den Fahrschüler auf den ersten Blick realistisch anmutende Darstellung. Das Auge fokussiert aber unwillkürlich in der Nähe vorhandene Objekte und Bewegungen, während sich der wirkliche Verkehr im allgemeinen in einer grösseren Distanz abspielt, und zwar meist in einer Distanz von sechs und mehr Metern; bei Entfernungen ab etwa sechs Metern erfolgt durch das menschliche Auge eine Fokussierung auf 'unendlich', was bedeutet, dass beim Fahren die Fokussierung konstant bleibt. Eine richtige Fokussierung ist insbesondere für das Abschätzen von in Fahrtrichtung verlaufenden Strecken und Geschwindigkeiten wesentlich, spielt aber spielt aber auch für das Abschätzen von quer zur Fahrtrichtung verlaufenden Distanzen und Geschwindigkeiten eine gewisse Rolle. Durch die unmittelbar vor der Fahrerkabine angeordnete Projektions- bzw. Wiedergabefläche gewöhnt sich der Fahrschüler unbewusst an nicht mit der späteren Realität übereinstimmende Darstellungen, was den Lemprozess in der Trainingsstation mindestens teilweise entwertet. Die stetige und wechselnde Fokussierung auf sehr nahe Objekte ermüdet ausserdem die Fahrschüler rasch und bildet im weiteren eine der Ursachen für ein unter der Bezeichnung 'Simulatorkrankheit' bekanntes Unwohlsein, das in Simulatoren bzw. Trainingsstationen auftreten kann.

Es sind auch Trainingsstationen bekannt, die diesen Nachteil vermeiden, indem die Projektions- bzw. Wiedergabefläche in einem genügenden Abstand von etwa vier bis sechs Metern vor der Fahrerkabine angeordnet wird; da - wie schon erwähnt - bei einer Distanz ab etwa sechs Metern eine Fokussierung auf 'unendlich' stattfindet, erübrigt sich eine grössere Entfernung der Projektions- bzw. Wiedergabefläche von der Fahrerkabine. Nun bedingt aber schon eine Distanz von vier bis sechs Metern zwischen Fahrerkabine und Projektions- bzw. Wiedergabefläche ein verhältnismässig grosses Lokal für die Trainingsstation, was an und für sich unerwünscht und im Hinblick auf das Folgende besonders zu vermeiden ist: einer der Zwecke der Verwendung von Trainingsstationen besteht - wie weiter oben erwähnt - darin, den Zeitaufwand des Instruktors pro Fahrschüler zu vermindern, was am einfachsten zu realisieren ist, wenn mehrere Trainingsstationen in einem Lokal untergebracht werden; infolge der grossen Abmessungen der Trainingsstationen muss daher ein solches Lokal sehr gross bzw. hallenähnlich sein, was aus Gründen der Erstellungs- und Betriebskosten natürlich sehr ungünstig ist.

Aus der **WO-96114713,** welche als nächstliegender Stand der Technik betrachtet wird, ist beispielsweise eine Trainingsstation bekannt, bei welcher eine Projektorenanlage mit einer Vielzahl von Projektoreneinheiten auf eine transluzide, etwa torusförmige Projektionsfläche gerichtet ist. Diese transluzide Projektionsfläche ist auf eine durch einen Kollimationsspiegel gebildete Wiedergabefläche gerichtet, die gleichsinnig gekrümmt ist wie die Projektionsfläche, und auf welcher ein für den Fahrschüler erkennbares Bild, das eine Verkehrssituation simuliert, erzeugt wird, und zwar in einer simulierten Distanz, wie sie dem üblichen Verkehrsgeschehen entspricht. Der Nachteil dieser Trainingsstation wird darin gesehen, dass die Projektorenanlage bezüglich Aufbau und Einstellung sehr aufwendig ist. Erstens wird eine sehr hohe Anzahl von Projektoreneinheiten eingesetzt, und zweitens erfolgt keine direkte Projektion der Bilder auf die Projektionsfläche; die optischen Achsen der einzelnen Projektoreneinheiten sind nicht direkt auf die Projektionsfläche gerichtet, so dass zur Belichtung der Projektionsfläche ein Spiegelsystem zur Strahlumlenkung notwendig ist. Solche Strahlumlenkungen sind bei der Verwendung des Projektionssystems in einem Fahrsimulator ungünstig, da kleinste Winkeländerungen verhältnismässig grosse Fehler im schliesslich zu erzeugenden virtuellen Bild zur Folge haben können, was dann zeitraubende Nachjustierungen bedingt.

Die **DE-44 42 378** beschreibt einen Teil einer Trainingsstation, nämlich ein Zusatzgerät zu einer Monitoranlage, mit deren Hilfe durch Zublendungen eine wirklichkeitsgetreuere Simulierung eines Verkehrsszenarios möglich sein soll.

In der **EP-0 455 540-A** wird eine Trainingsanlage für Helikopterpiloten beschrieben, mit welcher das Problem gelöst wird, dem Piloten nicht nur die durch die Front- und Seitenscheiben der Kabine erkennbaren Bilder zu projizieren sondern auch diejenigen Bilder, die durch die schräg unter dem Piloten angeordneten Fenster erkennbar sind. Die Projektorenanlage weist eine erste Projektorengruppe mit drei auf gleicher Höhe angeordneten Projektoreneinheiten und eine zweite Projektorengruppe mit zwei weiteren Projektoreneinheiten auf; die erste Projektorengruppe dient zur Projektion des durch die Front- und Seitenscheiben der Pilotenkanzel wahrnehmbaren Bilder, die Projektoreneinheiten der zweiten Projektoren erzeugen die Bilder, die seitlich und schräg unter der Pilotenkanzel wahrnehmbar sind. Die spezifischen Probleme, die sich bei der Projektion von Bildern beim Fliegen ergeben, unterscheiden sich offensichtlich von denjenigen, die sich bei der Projektion von Bildern für erdgebundene Fahrzeuge ergeben, so dass die Trainingsstation gemäss der **EP-0 455 540-A** keine Anleitung zur Lösung der Probleme von Trainingsstationen für erdgebundenen Fahrzeuge gibt.

Die **EP-0487 385-A1** beschreibt eine in einem Simulator, insbesondere einem Flugzeugsimulator, zu verwendende Einrichtung zur kollimierten Visualisierung mit Hilfe eines sphärischen Spiegels ausserhalb der Achse. Dabei soll bezüglich der Erhellung im Vergleich mit üblichen Einrichtungen ohne Mehrkosten eine bessere Wirkung erzielt werden. Dies soll dadurch erreicht werden, dass die Projektionsanlage denjenigen Flächenbereich des Bildschirms beleuchtet, der dem Kollimationsspiegel gegenüberliegt.

Die **GB-2 099 964-A** betrifft einen Simulator zur Gefechtsausbildung von Schützen und Kommandanten von Panzerfahrzeugen. Die Auszubildenden befinden sich in einem kubischen Gehäuse, welches im wesentlichen dieselben Betätigungsmittel und Anzeigegeräte enthält wie die Panzerfahrzeuge. Das Szenario, welches das Panzerfahrzeug umgibt, wird den Auszubildenden auf einem Monitor dargestellt, welchen sie durch ein Periskop erblikken; ferner sind entsprechende Zielgeräte vorhanden. Da die Probleme, die sich bei der Gefechtsausbildung stellen, wo im allgemeinen keine Rücksicht auf weitere Verkehrsteilnehmer erforderlich ist, sich grundsätzlich von den Problemen unterscheiden, welche sich beim Führen eines Motorfahrzeuges ergeben, lassen sich aus der **GB-2 099 964** keine Lehren zur Ausbildung von Trainingsstationen der eingangs genannten Art ziehen.

Die **WO-93/24915** beschreibt zahlreiche Probleme, die im Zusammenhang mit dem Erlernen der Beherrschung eines Motorfahrzeuges stehen, insbesondere mit Variationsmöglichkeiten in der zu visualisierenden Verkehrs- und Fahrzeugsituation und in der Detektierung von Fehlern des Fahrschülers. Auf die Fragen der qualitativ einwandfreien Simulation der Gesamtsituation, welche sich aus der Ausgestaltung der Fahrerkabine einerseits und aus der hochwertigen und visuell korrekten Darstellung des das Fahrzeug umgebenden Szenarios wird nicht in Einzelheiten eingetreten.

Die **EP-A-0 423 924** enthält eine Beschreibung einer Trainingsstation, bei welcher sich eine Miniaturausgabe eines Fahrzeuges, dessen Beherrschung erlernt werden soll, in einer Miniaturumgebung bewegt. Das Miniaturfahrzeug wird gesteuert durch einen Fahrschüler, der sich in einer Fahrerkabine befindet, welche der wirklichen Fahrerkabine des Fahrzeuges nachgebaut ist. Die Visualisierung der Umgebung des Minifahrzeuges aus der Perspektive eines supponierten Fahreres desselben erfolgt über ein Videosystem. Bei dieser Trainingsstation ist die visuell korrekte bzw. wirklichkeitsgetreue Darstellung, also nicht das Abbild der Miniaturumgebung, nicht gewährleistet.

Schliesslich ist im Artikel ***Driving Simulation at General Motors*** aus **Automotive Engineering, Band 102, Nr. 9, Seiten 14 bis 19, vom 01.September 1994,** der Einsatz von Fahrzeugsimulatoren zur Hilfe beim Entwurf von neuen Fahrerkabinen und ihren Ausrüstungen beschrieben. Mit Hilfe eines zu diesem Zweck hergestellten Simulators soll getestet werden, in welcher Weise sich Einzelheiten im Ausbau der Fahrerkabine auf das Verhalten eines Fahrzeugführers auswirken. Wichtig ist hier vor allem der modulartige Aufbau der Fahrerkabine, welcher es beispielsweise erlaubt, einzelne Teile auszutauschen bzw. zu verändern. Der wirklichkeitsgetreuen Simulation der Umgebung des Fahrzeuges, wie insbesondere der optisch korrekten Darstellung, wird wenig Bedeutung zugemessen. Daoffensichtlich die Erfordernisse hierbei andere sind als bei der Verwendung von Simulatoren im Unterricht lässt sich aus diesem Artikel kaum etwas zur Lösung der Probleme von Simulatoren zu Lehrzwecken ableiten.

Die Aufgabe der Erfindung wird darin gesehen, eine Trainingsanlage der eingangs genannten Art zu schaffen, welche ein realitätsnahes Training dadurch fördert, dass sie die weiter oben erwähnten Nachteile bezüglich der Projektion nicht aufweist und daher bei geringem Platzbedarf die Vermittlung von realistisch wahrnehmbaren und fokussierbaren Verkehrsszenarien gestattet, während gleichzeitig die direkte Umgebung des Fahrschülers, also im wesentlichen die Fahrerkabine, optimal simuliert wird.

Diese Aufgabe wird erfindungsgemäss durch die Merkmale des kennzeichnenden Teils des Patentanspruchs **1** gelöst.

Vorteilhafte Weiterbildungen der erfindungsgemässen Trainingsstation sind durch die abhängigen Patentansprüche **2** - **6** definiert.

Die Aufgabe der Erfindung betrifft im weiteren eine Verwendung der Trainingsstation, bei der insbesondere der Zeitaufwand des Instruktors minimalisiert werden soll.

Dieser Teil der Aufgabe wird durch die Merkmale des kennzeichnenden Teils des Patentanspruchs **7** gelöst.

Die neue Trainingsstation weist - wie die bisher bekannten Trainingsstationen - als fahrzeugseitige Baugruppe eine Fahrerkabine mit den entsprechenden Betätigungsmitteln und Anzeigegeräten auf. Das optische System, mit welchem dem Fahrschüler die Verkehrsszenarien zur Wahrnehmung gebracht werden, umfasst wie üblich eine Projektorenanlage und eine Projektionsfläche. Die Projektionsfläche bildet nicht gleichzeitig die Wiedergabefläche, auf welche der Blick des Fahrschülers gerichtet ist. Die Wiedergabefläche wird durch einen Kollimationsspiegel gebildet, auf welcher sich das auf die transluzide Projektionsfläche projizierte Bild abbildet bzw. spiegelt, wobei für den Fahrschüler ein virtuelles Bild entsteht. Der Kollimationsspiegel befindet sich unmittelbar vor der Fahrerkabine. Die gegenseitige Anordnung der Projektorenanlage, der Projektionsfläche und des Kollimationsspiegels muss natürlich so gewählt werden, dass eine wahrheitsgetreue Darstellung der Verkehrsszenarien erfolgt. Auf diese Weise erreicht man, dass trotz des geringen Platzbedarfs dem Fahrschüler eine Fokussierung auf zehn und mehr Meter ermöglicht wird. Die Projektorenanlage umfasst drei Projektoreneinheiten, die so angeordnet sind, dass ihre optischen Achsen unter gegenseitigen Winkeln angeordnet und direkt auf drei aneinandergrenzende Sektoren der Projektionsfläche gerichtet sind.

Für den Lerneffekt ist es natürlich besonders günstig, dass erfindungsgemäss als Fahrerkabine in der Trainingsstation eine realistische, vorzugsweise austauschbare Fahrerkabine verwendet wird. Bevorzugt verwendet man eine Fahrerkabine, die einer echten Fahrerkabine mit Bezug auf die Form- und Farbgebung praktisch gleich und mit echten, serienmässigen Betätigungsmitteln und Anzeigegeräten ausgestattet ist. Wenn die Fahrerkabine genau derjenigen des später zum Einsatz kommenden Schulfahrzeuges entspricht, so erleichtert dies den Umstieg von der Trainingsstation in das Schulfahrzeug und ermöglicht es auch, den Unterricht abwechselnd in der Trainingsstation und im Schulfahrzeug abzuhalten. Eine austauschbare Fahrerkabine bietet den weiteren Vorteil, dass eine Trainingsstation nach Bedarf für mehrere bzw. sich ändernde Fahrerkabinen verwendet werden kann, was - auch wenn dazu jeweils gewisse Anpassungsarbeiten notwendig sind - einen rationellen und langfristigen, von der Art der jeweils zur Verfügung stehenden Schulfahrzeuge unabhängigen Einsatz der Trainingsstation ermöglicht.

Die Trainingsstation ist, wie auch diejenige gemäss dem nächstliegenden Stand der Technik, so ausgebildet, dass die Fahrerkabine zusammen mit weiteren Wandungen einen geschlossenen Raum bzw. eine Kapsel bildet, so hat dies den Vorteil, dass trotz der für die Projektion notwendigen Verdunkelung das Lokal, in welchem sich die Trainingsstation befindet, hell sein kann, so dass sich andere Fahrschüler und Instruktoren nicht in einem verdunkelten Lokal aufhalten und bewegen müssen.

Die erfindungsgemässe Trainingsstation bzw. der Szenariengenerator enthalten nicht nur ein System zur Erzeugung eines optisch wahrnehmbaren Verkehrsszenarios enthält, wozu auch die Möglichkeit der Veränderung der Sichtverhältnisse und der Blick auf die Haube des simulierten Fahrzeuges gehören können. Wenn ein solches optisch wahmehmbares Verkehrsszenario auch das für den Fahrschüler wesentlichste Element der Verkehrssituation bildet, sondern auch zusätzliche Systeme zur Erzeugung von akustisch und/oder mechanisch und/oder nasal wahmehmbaren Elementen der Verkehrssituation, aufweisen, jede Verkehrssituation wesentlich getreuer simulieren. Das mechanische System, mit welchem dem Fahrschüler beispielsweise das Fahren auf Strassen mit schlechtem Belag oder im Gelände oder an Hängen simuliert werden kann, kann entweder nur auf den Fahrersitz oder - um eine bessere Simulationswirkung zu erzeugen - auf die Fahrerkabine wirken.

Vorzugsweise ist die Trainingsstation mit einer Datenverarbeitungseinrichtung ausgerüstet, welche den Szenariengenerator steuert.

Wie schon wiederholt erwähnt, besteht einer der Zwecke der Verwendung der Trainingsstation darin, den Zeitaufwand des Instruktors zu vermindern. Damit der Fahrschüler dennoch nicht unkontrolliert in der Trainingsstation sein Training abhält, ist vorzugsweise eine Sensorvorrichtung vorhanden, welche die qualitative und/oder quantitative, durch den Fahrschüler verursachte Betätigung der Betätigungsmittel erfasst. Mit Hilfe der Datenverarbeitungseinrichtung werden die der erfassten Betätigung entsprechenden Daten verwertet. Dazu enthält die Datenverarbeitungseinrichtung eine Einheit, in welcher die Abweichung der erfassten Betätigung von der theoretisch optimalen Betätigung, welch letztere vorbestimmt und gespeichert ist, ermittelt wird. Diese Abweichung entspricht den vom Fahrschüler begangenen Fehlern, mindestens soweit sie Teilen der Betätigung entsprechen, die durch die Sensorvorrichtung erfassbar sind. Die Verwertung der Daten, die diese Fehler repräsentieren, kann je nach Art der Betätigung in verschiedener Weise erfolgen.

Beispielsweise können diese Fehlerdaten gespeichert und später visualisiert oder ausgedruckt werden, so dass der Fahrschüler sich nach Beendigung des Unterrichts über seine Fehler informieren kann.
Besonders günstig ist es, wenn die Fehlerdaten dazu verwendet werden, dem Fahrer unmittelbar nach dem Begehen eines Fehlers diesen zu melden; zu diesem Zwecke kann eine Fehlermeldeeinrichtung vorgesehen sein, die an die Datenverarbeitungsanlage angeschlossen ist und die den Fehler in einer vom Fahrschüler bemerkbaren Weise meldet. Fehlermeldeeinrichtungen können optisch und/oder akustisch wirken.

Als vorteilhaft hat sich die Kombination einer akustischen mit einer optischen Fehlermeldeeinrichtung erwiesen. Die akustische Fehlermeldeeinrichtung umfasst einen in der Fahrerkabine angeordneten Lautsprecher oder Kopfhörer für den Fahrschüler, und eine dem Lernverhalten besonders förderliche Art der Fehlermeldung besteht darin, den Fahrer wörtlich und somit fallbezogen auf seine Fehler aufmerksam zu machen. Die optische Fehlermeldeeinrichtung umfasst eine Monitoreinrichtung oder eine entsprechende Projektionseinrichtung, die vorzugsweise ausserhalb des üblichen Sichtbereiches des Fahrschülers angeordnet und vorzugsweise ein- und ausschaltbar ist, so dass der Fahrschüler zwar die Möglichkeit hat, seine Fehler zu visualisieren, jedoch nicht durch die Fehlermeldeeinrichtung in seiner Konzentration gestört wird.

Bei einer vorteilhaften Verwendung der Trainingsstation wird diese, ggfs. mit weiteren Trainingsstationen, mit einer Instruktorenstation verbunden, wie dies in der CH-Patentanmeldung Nr. 2263/96 ausführlich beschrieben ist. Eine solche Anlage mit mehreren Trainingsstationen und einer Instruktorenstationen erlaubt es, den Zeitaufwand des Instruktors pro Fahrschüler gering zu halten, da der Instruktor während des Unterrichts alternativ jeweils einen von mehreren Fahrschüler überwachen und damit die ganze Gruppe der Fahrschüler gleichzeitig betreuen kann.

Weitere Einzelheiten und vorteilhafte Weiterbildungen der Erfindung werden im folgenden anhand eines Ausführungsbeispiels und mit Bezug auf die Zeichnung ausführlich beschrieben. Darin zeigt:
- **Fig. 1**: eine Trainingsstation in vereinfachter Darstellung, in Fahrtrichtung von hinten von der Linie **I** - **I** der **Fig. 2** gesehen;
- **Fig. 2**: die in **Fig. 1** dargestellte Trainingsstation, von oben gesehen, wobei zur Verdeutlichung eine obere und eine schräge, vordere Wandung nicht eingezeichnet sind;
- **Fig. 3**: die in **Fig. 1** und **Fig. 2** dargestellte Trainingsstation, in einem Schnitt längs der Linie **III - III** der **Fig.2;** und
- **Fig. 4**: die in den **Fig. 1, 2** und **3** dargestellte Trainingsstation in einem Schaubild, von hinten rechts gesehen; und
- **Fig. 5**: das Gesichtsfeld des Fahrschülers mit Bezug auf die Frontsicht, wie es sich einerseits im Schulfahrzeug und anderseits in der Trainingsstation darstellt;
- **Fig. 6**: das Gesichtsfeld des Fahrschülers mit Bezug auf die Rückspiegel; und
- **Fig. 7**: eine Anlage mit fünf Trainingsstationen und einer Instruktorenstation.

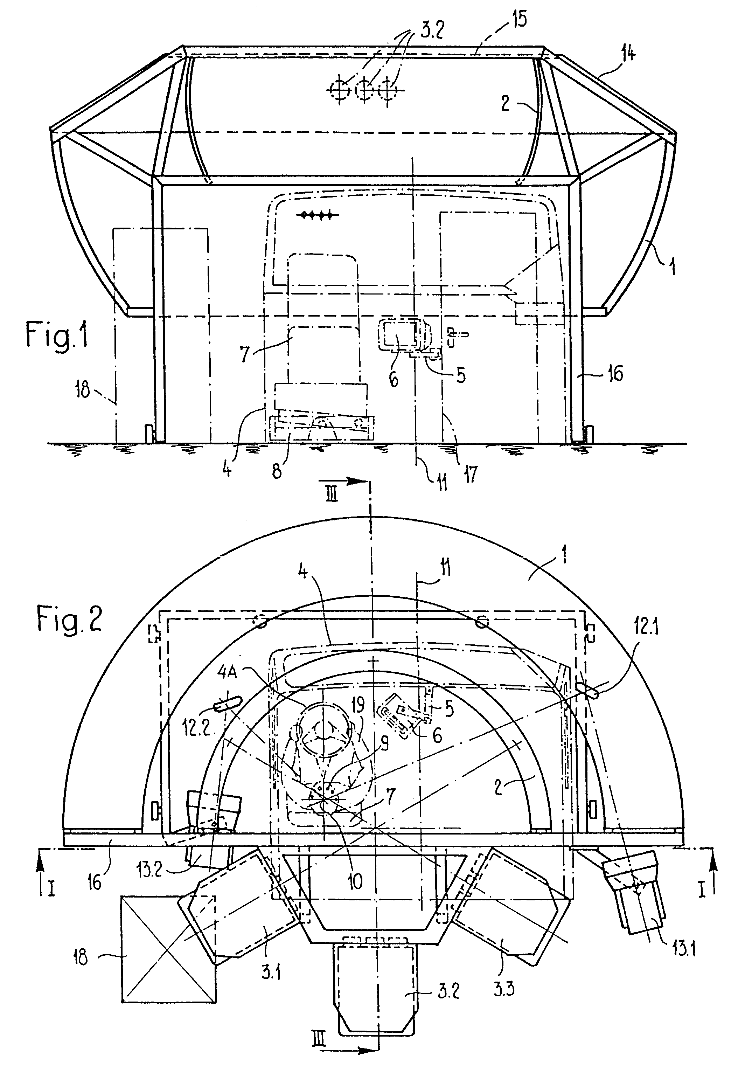

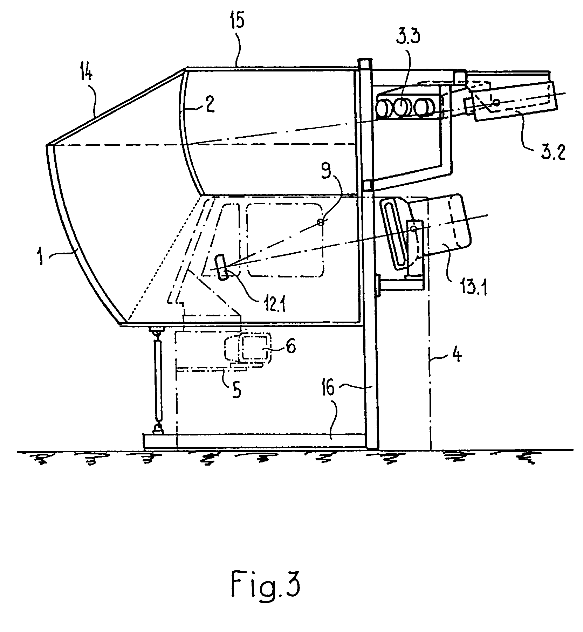

Die in den **Fig. 1** bis **4** dargestellte Trainingsstation weist als Wiedergabefläche einen domartig gekrümmten Kollimationsspiegel **1** auf. Auf diesen ist eine Fläche einer teiltransparenten Projektionsfläche **2** gerichtet, auf deren entgegengesetzte Fläche eine Projektorenanlage mit drei Projektoreneinheiten **3.1, 3.2, 3.3** gerichtet ist. Die Projektoreneinheiten **3.1, 3.2, 3.3** sind so angeordnet, dass ihre optischen Achsen direkt auf drei aneinanderandergrenzende Sektoren der Projektionsfläche **2** gerichtet sind. Die drei Projektoreneinheiten **3.1, 3.2, 3.3** können auf gleicher Höhe befestigt werden, es ist aber auch möglich, je nach der Anordnung der Projektionsfläche **2** und der Wiedergabefläche **1** bzw. der Relativlage des Fahrschülers zur Wiedergabefläche **1** die seitlichen Projektoreneinheiten **3.1, 3.3** auf einer anderen Höhe zu befestigen als die mittlere Projektoreneinheit **3.2**. Durch die Direktprojektion auf die Projektionsfläche vermeidet man die Anordnung von aufwendigen Spiegelanordnungen für die Strahlumlenkung.
Eine imitierte Fahrerkabine **4**, im vorliegenden Ausführungsbeispiel eines Nutzfahrzeuges, ist - in simulierter Fahrtrichtung gesehen - hinter dem Kollimationsspiegel **1** angeordnet. In der Fahrerkabine **4**, die zu einem linksgesteuerten Fahrzeug gehört, erkennt man eine Monitoreinrichtung mit einem, an einem Schwenkarm **5** befestigten, Monitor **6**, der sich nicht im üblichen Gesichtsfeld eines Fahrschülers **19** befindet, jedoch vom Fahrschüler **19** bei entsprechender Drehung und Neigung seines Kopfes und bei geeigneter Stellung des Schwenkarms **5** einsehbar ist. Der Fahrschüler **19** befindet sich auf einem Fahrersitz **7**, welcher über ein mechanisches System **8** beweglich abgestützt ist, um dem Fahrschüler **19** Bewegungen wahrnehmbar zu machen, die beispielsweise das Fahren auf einer Strasse mit schlechtem Belag oder im Gelände simulieren.

Der mit **9** bezeichnete Augenpunkt des Fahrschülers **19** befindet sich vor und leicht über dem Nackenrotationszentrum **10** des Fahrschülers **19**, und beide sind links der Längsmittelachse **11** der Trainingsstation sowie in etwa halber Höhe des Kollimationsspiegels **1** angeordnet.

Ausserhalb der Fahrerkabine **4** sind ein rechter Rückspiegel **12.1** und ein linker Rückspiegel **12.2** angeordnet. Wenn es sich bei der Fahrerkabine **4** um die Fahrerkabine eines PKWs handelt, so kann zusätzlich ein üblicher Innenrückspiegel vorhanden sein. Hinter dem Kollimationsspiegel **1** und etwas weiter von der Längsmittelachse **11** entfernt als die Rückspiegel **12.1, 12.2** sind ein rechter Monitor **13.1** und ein linker Monitor **13.2** vorgesehen, wobei der rechte Monitor **13.1** auf den rechten Rückspiegel **12.1** und der linke Monitor **13.2** auf den linken Rückspiegel **12.2** gerichtet ist. Ein weiterer, etwa mittig angeordneter Rückspiegel würde natürlich einen weiteren Monitor bedingen. Anstelle der Monitoren und Rückspiegel könnten auch entsprechend angeordnete Projektoren und Projektionsflächen vorgesehen sein.

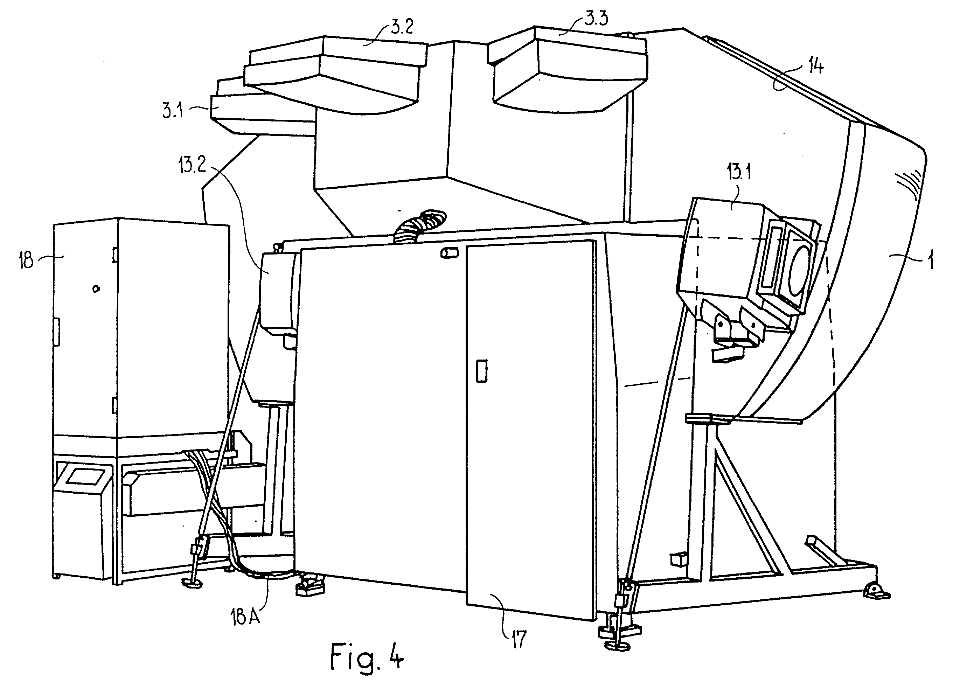

Eine Wandung **14** verbindet die Oberkanten des Kollimationsspiegels **1** und der Projektionsfläche **2** und eine weitere Wandung **15** bildet die obere Begrenzung der Trainingsstation, die ausserdem eine mehrteilige Struktur **16** besitzt, über welche sie am Boden eines Trainingslokals abgestützt ist. Die Trainingsstation weist weitere, teilweise nur in **Fig. 4** dargestellte Wandungen auf und bildet eine geschlossene Kapsel, zu welcher man über eine Türe **17** Zutritt hat.

Zur Trainingsstation gehört im weiteren ein Elektronikschrank **18** mit einer Datenverarbeitungseinrichtung, der im vorliegenden Beispiel ausserhalb der oben genannten Kapsel angeordnet und über eine Kabelvorrichtung **18A** eines im weiteren nicht dargestellten Kommunikationsnetzwerkes mit der letzteren verbunden ist.

Die Wirkungsweise der oben beschriebenen Teile wird im folgenden genauer beschrieben.

Der Fahrschüler **19** nimmt den Fahrersitz **7** in der Fahrerkabine **4** ein. Die Projektoreneinheiten **3.1, 3.2, 3.3** generieren ein optisch wahrnehmbares, zeitlich änderndes Verkehrsszenario, welches auf der Projektionsfläche **2** visualisiert wird. Die Projektionsfläche **2** ist auf den Kolllimationsspiegel **1** gerichtet, in welchem sich schliesslich das Verkehrsszenario für den Fahrschüler **19** spiegelt. Gleichzeitig werden durch die Monitoren **13.1, 13.2** entsprechende Rückspiegelszenarien, die in den Rückspiegeln **12.1** bzw. **12.2** sichtbar sind, generiert.

Infolge der gewölbten Ausbildung des Kollimationsspiegels **1** und infolge der gegenseitigen Lage des Kollimationsspiegels **1** und der Rückspiegel **12.1, 12.2** einerseits sowie des Augenpunktes **9** und des Nackenrotationszentrums **10** des Fahrschülers **19** anderseits stellt sich das Verkehrsszenario einschliesslich des Rückspiegelszenarios und des Blickes auf die Fahrzeughaube für den Fahrschüler **19** naturgetreu dar, auch bei den beim Lenken eines Fahrzeuges üblichen kleineren Bewegungen.

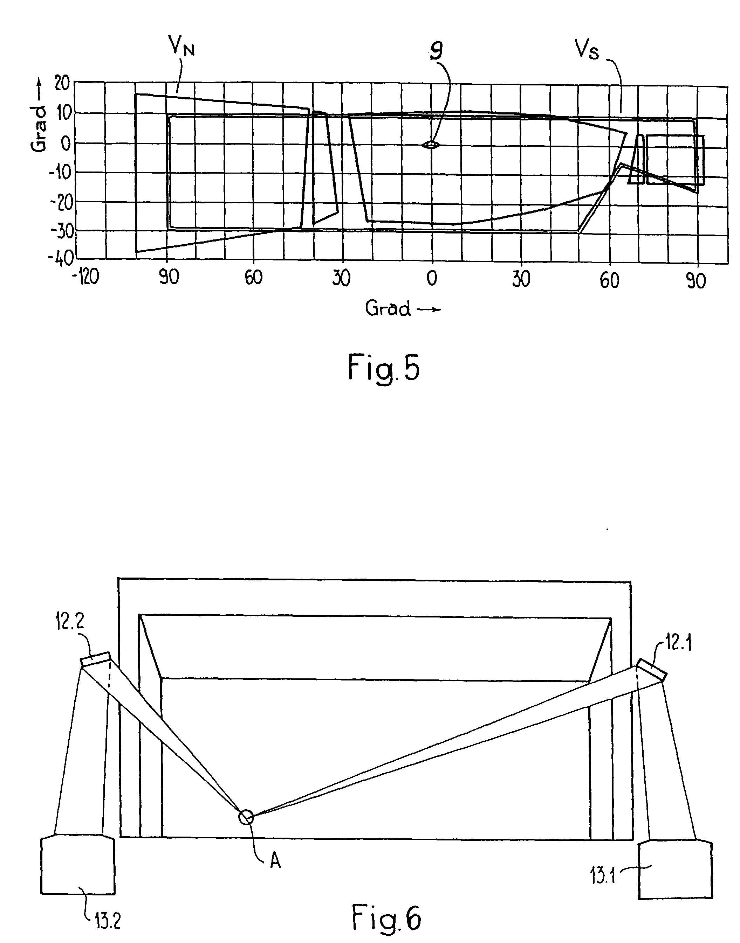

Wie sich aus der oben beschriebenen Anordnung das Gesichtsfeld des Fahrschülers **19** ergibt, ist in **Fig. 5** dargestellt. Diese zeigt in einer schematischen Ansicht - von vorne gesehen - ein rechtwinkliges Koordinatensystem, in dem die Abszisse und die Ordinate Winkelgrade des Gesichtsfeldes des Fahrschülers darstellen und der Augenpunkt **9** in einer mittleren Lage eingezeichnet ist. Das Begrenzung des Gesichtsfeldes **Vn**, wie sie sich in einer Fahrerkabine eines realen Fahrzeuges darstellt, ist mit einfachen Linien eingezeichnet, diejenige des Gesichtsfeldes **Vs**, wie sie sich in der Trainingsstation darstellt, mit doppelten Linien. Wie aus **Fig. 5** hervorgeht, ist der Unterschied zwischen den Gesichtsfeldern **Vn** und **Vs** unbedeutend.

Trotz der örtlichen Nähe des Kollimationsspiegels **1** zur Fahrerkabine **4** erlaubt die Verwendung des Kollimationsspiegels **1** als Wiedergabefläche eine den üblichen Verhältnissen im Strassenverkehr entsprechende Fokussierung, so dass die optischen Verhältnisse in der Trainingsstation weitgehend die gleichen sind wie in einem Schulfahrzeug.

Die Darstellung des Rückspiegelszenarios, welches natürlich einen Bestandteil des gesamten Szenarios bildet, und das entsprechende Gesichtsfeld des Fahrschülers sind in **Fig. 6** aufgezeichnet.

Die im Elektronikschrank **18** angeordnete Datenverarbeitungseinrichtung steuert die Projektoreneinheiten **3.1, 3.2, 3.3** und die Monitoren **13.1, 13.2.** sowie das zusätzliche mechanische System **8**, mittels welchem dem Fahrschüler zum Beispiel Unebenheiten und Neigungen einer simulierten Strasse zur Wahrnehmung gebracht werden. Der Fahrschüler **19** betätigt in der Fahrerkabine **4** angeordnete Betätigungsmittel, von welchen nur ein Lenkrad **4A** dargestellt ist. Die Betätigung wird durch eine nicht dargestellte Sensoreinrichtung erfasst. In der Datenverarbeitungseinrichtung erfolgt die Ermittlung der Abweichung der erfassten Betätigung von der vorbestimmten und gespeicherten, für die jeweilige Verkehrssituation optimalen Betätigung, welche Abweichung den vom Fahrschüler **19** begangenen Fehlern entspricht. Die Rückmeldung dieser Fehler an den Fahrschüler erfolgt einerseits permanent über einen in der Fahrerkabine angeordneten Lautsprecher und anderseits auf Anforderung des Fahrschülers über den Monitor **6**.

Da die Trainingsstation bzw. im vorliegenden Ausführungsbeispiel die Strahlenbündel der Projektoreneinheiten und Monitoren **3.1, 3.2, 3.3, 13.1, 13.2,** die Projektionsfläche **2** und der Kollimationsspiegel **1** zusammen mit der Fahrerkabine **4** eine geschlossene Kapsel bilden, muss die Umgebung dieser Kapsel nicht verdunkelt werden.

Abschliessend seien noch einige Zahlenwerte angegeben, die sich auf das oben beschriebene Ausführungsbeispiel der Trainingsstation beziehen. Diese Werte sind nur Richtwerte und können je nach Typ der Fahrerkabine schwanken, teilweise sind sie auch von der Körpergrösse und Haltung des Fahrschülers abhängig; einzelne Werte lassen sich ferner durch Einstellung der entsprechenden Bauteile verändern.

Das Gesichtsfeld ist, wie **Fig. 5** von vorne zeigt, an das in einem Schulfahrzeug vorhandenen Gesichtsfeld angepasst. Es beträgt - von einer mittleren oder 'Null'-Blickrichtung aus gemessen - horizontal beidseitig je 90 Grad, total also 180 Grad horizontal, vertikal aufwärts 10 Grad und vertikal abwärts 30 Grad, total also 40 Grad vertikal.

Die Bewegungsfreiheit des Augenpunktes innerhalb des Betrachtungsvolumens liegt in einem Bereich eines Würfels mit einer Kantenlänge von etwa 60 cm.

Die Kollimations- bzw. Fokussierdistanz beträgt mindestens 10 m.

Eine weitwinklige Darstellung der Frontsicht wird durch das Aneinanderfügen der Bilder mehrerer Kanäle erzeugt. Dabei ist es wichtig, dass bei den Übergängen benachbarter Bilder Überlappungen zwar vorhanden, diese aber klein sind. Die maximale Überlappung beträgt 2 Grad, die minimale 1 Grad.

Beim Aneinanderfügen von Segmenten zur Bildung des Kollimationsspiegels entstehen Spalten von maximal 2 mrad.

Als Leuchtdichte sind 6 footlambert vorgesehen, wenn 10% des Kanales ein schwarzes und 90 % des Kanals ein weisses Bild liefern; dieser Wert sinkt auf die Hälfte bei einer mittleren Bildhelligkeit. Die Leuchtdichte beträgt im Zentrum das Doppelte des entsprechenden Wertes am Rand.

Als limitierende Auflösung ist ein Wert von 1.16 mrad vorgesehen.

Die Abtastraten sind 15 bis 60 kHz horizontal und 50 bis 100 Hz vertikal.

Das in den Rückspiegeln erscheinende Bild stellt sich so dar wie im Schulfahrzeug. Das Gesichtsfeld beträgt horizontal 45 Grad und vertikal 60 Grad.

Die Helligkeit des Rückspiegelbildes ist verstellbar und auf die Helligkeit der Frontsicht abstimmbar.

Die Farbmonitore für die Rückspiegel verfügen horizontal über eine Auflösung von 1280 Pixel, vertikal von 1024 Zeilen.

Wie schon erwähnt, handelt es sich bei den obigen Zahlenwerten nur um Beispiele, die sich auf die beschriebene Ausführungsform beziehen.

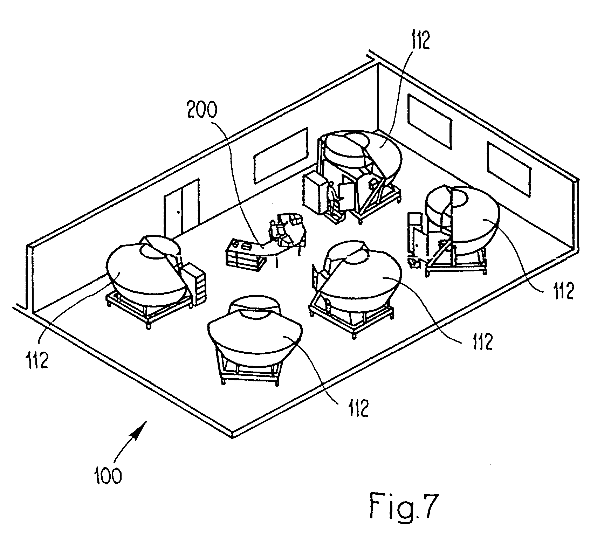

Fig. 7 zeigt schliesslich eine Anlage 100 mit fünf Trainingsstationen 112 und einer Instruktorenstation 200, die in einem Lokal angeordnet sind. Hier soll noch erwähnt werden, dass jede Trainingsstation autonom ist bzw. auch dann einsetzbar ist, wenn nur ein Fahrschüler, jedoch kein Instruktor, vorhanden oder die Instruktorenstation nicht in Betrieb ist.

## Patentansprüche

1. Trainingsstation zum Erlernen der Beherrschung eines motorisierten, erdgebundenen Fahrzeuges, umfassend eine als geschlossene Kapsel ausgebilldete Fahrerkabine (**4**) für einen Fahrschüler (**19**), zur Simulierung des Strassenfahrzeuges, in welcher Fahrerkabine Betätigungsmittel (**4A**) zur simulierten Betätigung des simulierten Strassenfahrzeuges angeordnet sind, und ferner umfassend einen Szenariengenerator zur Simulierung von durch den Fahrschüler (**19**) wahrnehmbaren, zeitlich ablaufenden Verkehrssituationen, mit einer Projektorenanlage (**3.1, 3.2, 3.3**) und einer vor der Fahrerkabine (**4**) angeordneten Wiedergabefläche (**1**), welche als ein unmittelbar vor der Fahrerkabine (**4**) angeordneter Kollimationsspiegel (**1**) ausgebildet ist, auf den eine Projektionsfläche (**2**) für die von der Projektorenanlage (**3.1, 2.2, 3.3**) erzeugten Bilder gerichtet ist, um dem Fahrschüler die Verkehrssituationen in einer wirklichkeitsgetreuen Distanz zu simulieren,
**dadurch gekennzeichnet,**
- dass die Projektorenanlage mehrere unter gegenseitigen Winkeln angeordnete Projektoreneinheiten (**3.1, 3.2, 3.3**) umfasst, deren optische Achsen direkt auf aneinandergrenzende Sektoren der Projektionsfläche (**2**) gerichtet sind.
- dass die Fahrerkabine (**4**) ein Abbild einer serienmässigen Fahrerkabine oder eine serienmässige Fahrerkabine ist, die gegen eine Fahrerkabine eines anderen Fahrzeugtypes austauschbar ist, und
- dass sie ein akustisches und/oder ein mechanisches System vorgesehen ist, zur Simulierung einer vom Fahrschüler (**19**) wahrnehmbaren akustischen und/oder mechanischen Verkehrssituation.

2. Trainingsstation nach Anspruch 1,
**dadurch gekennzeichnet,**
dass sie eine Datenverarbeitungseinrichtung (**18**) enthält, um den Szenariengenerator zu steuem.

3. Trainingsstation nach einem der vorangehenden Ansprüche,
**dadurch gekennzeichnet,**
dass sie eine Sensoreinrichtung zur Erfassung der Betätigung der Betätigungsmittel (**4A**) durch den Fahrschüler (**19**) enthält.

4. Trainingsstation nach einem der vorangehenden Ansprüche,
**dadurch gekennzeichnet,**
dass die Datenverarbeitungseinrichtung (**18**) eine Differenziereinrichtung enthält, um die die Fehler des Fahrschülers (**19**) repräsentierende Abweichung der erfassten Betätigung von der der jeweiligen Verkehrssituation entsprechenden, vorbestimmten und gespeicherten optimalen Betätigung zu ermitteln, sowie vorzugsweise eine Speichereinrichtung umfasst, um die ermittelten Fehler zu speichem.

5. Trainingsstation nach einem der vorangehenden Ansprüche,
**dadurch gekennzeichnet,**
dass sie eine im Wahrnehmungsbereich des Fahrschülers angeordnete akustische und/oder optische (**6**) Fehlermeldeeinrichtung umfasst, zur Meldung der Fehler an den Fahrschüler (**19**).

6. Trainingsstation nach einem der vorangehenden Ansprüche,
**dadurch gekennzeichnet,**
dass der Szenariengenerator zwei, auf je einen, am Äusseren der Fahrerkabine befestigten, Rückspiegel (**12.1, 12.2**) gerichtete Monitore (**13.1, 13.2**) umfasst.

7. Verwendung der Trainingsstation (**112**) nach einem der vorangehenden Ansprüche,
**dadurch gekennzeichnet,**
dass sie in einer Anlage (**100**) über ein multifunktionales Telekommunikationssystem mit einer Instruktorenstation (**200**) verbunden ist, an welche ggfs. weitere Trainingsstationen (**112**) angeschlossen sind.

## Claims

1. Training station for learning how to control a motorised terrestrial vehicle, comprising a driver's cab (4) in the form of a closed capsule for a learner driver (19), to simulate the road vehicle, in which driver's cab are arranged operating means (4A) for simulated operation of the simulated road vehicle, and also comprising a scenario generator for simulating traffic situations which can be perceived by the learner driver (14) and which change with time, having a projector installation (3.1, 3.2, 3.3) and a reproduction surface (1) which is arranged in front of the driver's cab (4) and is in the form of a collimating mirror (1) arranged immediately in front of the driver's cab (4), directed onto which mirror (1) is a projection surface (2) for the images generated by the projector installation (3.1, 3.2, 3.3), in order to simulate the traffic situations for the learner driver at a realistic distance,
characterised in that
- the projector installation comprises a plurality of projector units (3.1, 3.2, 3.3) which are arranged at mutual angles and the optical axes of which are directed straight at mutually contiguous sectors of the projection surface (2),
- the driver's cab (4) is a replica of a volume production driver's cab or is a volume production driver's cab that is interchangeable with a driver's cab from a different model of vehicle, and
- an acoustic and/or a mechanical system is provided in order to simulate an acoustic and/or mechanical traffic situation perceptible to the learner driver (19).

2. Training station according to claim 1,
characterised in that it contains a data processing device (18) in order to control the scenario generator.

3. Training station according to either of the preceding claims,
characterised in that it contains a sensor device for logging the handling of the operating means (4A) by the learner driver (19).

4. Training station according to any one of the preceding claims,
characterised in that the data processing device (18) contains a differentiating device in order to ascertain the deviation in the logged handling, representing the errors by the learner driver (19), from the predetermined and stored optimal handling appropriate to the respective traffic situation, and that it preferably also includes a memory device in order to store the errors that have been detected.

5. Training station according to any one of the preceding claims,
characterised in that it includes an acoustic and/or optical (6) error message device arranged within the learner driver's range of perception, for reporting the error to the learner driver (19).

6. Training station according to any one of the preceding claims,
characterised in that the scenario generator comprises two monitors (13.1, 13.2), each directed at a respective rear mirror (12.1, 12.2) fixed on the exterior of the driver's cab.

7. Use of the training station (112) according to any one of the preceding claims,
characterised in that it is connected in an installation (100) via a multi-functional telecommunications system to an instructor's station (200) to which additional training stations (112) are linked if appropriate.

## Revendications

1. Station d'entraînement pour apprendre la maîtrise d'un véhicule motorisé fixé au sol, comprenant une cabine de pilotage (4) qui se présente sous la forme d'une capsule fermée pour un élève conducteur (19), pour simuler le véhicule routier, cabine dans laquelle sont agencés des moyens de commande (4A) pour simuler la commande du véhicule routier simulé, et comprenant par ailleurs un générateur de scénarios pour simuler des situations de trafic observables par l'élève conducteur (19) et qui se déroulent dans le temps, avec une installation de projecteurs (3.1, 3.2, 3.3) et une surface de reproduction (1) agencée devant la cabine de pilotage (4), qui se présente sous la forme d'un miroir de collimation (1) agencé directement devant la cabine de pilotage (4), sur lequel est dirigée une surface de projection (2) pour les images produites par l'installation de projecteurs (3.1, 3.2, 3.3), pour simuler aux yeux de l'élève conducteur les situations de trafic à une distance fidèle à la réalité,
caractérisée
- en ce que l'installation de projecteurs comprend plusieurs unités de projection (3.1, 3.2, 3.3) agencées selon des angles mutuels, dont les axes optiques sont orientés directement sur des secteurs limitrophes de la surface de projection (2)
- en ce que la cabine de pilotage (4) est une reproduction d'une cabine de pilotage de série ou une cabine de pilotage de série, qui peut être remplacée par une cabine de pilotage d'un autre type de véhicule, et
- en ce qu'il est prévu un système acoustique et/ou un système mécanique pour simuler une situation de trafic acoustique et/ou mécanique observable par l'élève conducteur.

2. Station d'entraînement selon la revendication 1,
caractérisée
en ce qu'elle contient un dispositif de traitement de données (18) pour commander le générateur de scénarios.

3. Station d'entraînement selon l'une quelconque des revendications précédentes,
caractérisée
en ce qu'elle contient un dispositif de détection pour enregistrer la commande des moyens de commande (4A) par l'élève conducteur (19).

4. Station d'entraînement selon l'une quelconque des revendications précédentes,
caractérisée
en ce que le dispositif de traitement de données (18) contient un dispositif de différenciation pour déterminer la différence, représentant les erreurs de l'élève conducteur (19), entre la commande enregistrée et la commande optimale prédéterminée et mémorisée correspondant à la situation de trafic respective, et comprend de préférence un dispositif de mémorisation pour mémoriser les erreurs déterminées.

5. Station d'entraînement selon l'une quelconque des revendications précédentes,
caractérisée
en ce qu'elle comprend un dispositif de signalisation d'erreurs acoustique et/ou optique (6) agencé dans la zone de perception de l'élève pour signaler les erreurs à l'élève conducteur (19).

6. Station d'entraînement selon l'une quelconque des revendications précédentes,
caractérisée
en ce que le générateur de scénarios comprend deux moniteurs (13.1, 13.2) dirigés sur un rétroviseur respectif (12.1, 12.2) fixé à l'extérieur de la cabine de pilotage.

7. Utilisation de la station d'entraînement (112) selon l'une quelconque des revendications précédentes,
caractérisée
en ce qu'elle est reliée dans une installation (100), par l'entremise d'un système de télécommunication multifonctionnel, à une station d'instructeurs (200) à laquelle sont éventuellement reliées d'autres stations d'entraînement (112).
